# EUROPEAN PATENT APPLICATION

(11) **EP 0 779 052 A1**
(43) Date of publication of application: **18.06.1997**
(21) Application number: 96203566.3
(22) Date of filing: 16.12.1996
(51) Int. Cl.: A47J 37/04

(54) **Method and apparatus for subjecting products to a heat treatment**

(30) Priority: 15.12.1995 NL 1001911
(71) Applicant: Machinefabriek en Roestvrijstaalindustrie Noord-Oost Nederland B.V., 7602 KA Almelo (NL)
(72) Inventor: Te Brake, Leonard, 7211 AJ Eefde (NL)
(74) Representative: Bartelds, Erik

(57) **Abstract**

The invention relates to a method for subjecting products to a heat treatment, for instance cooking of food products, wherein the products are transported along heating means and the orientation of the products relative to the heating means is varied during the transport. The products can herein be subjected to a movement transversely of their transporting direction and can be transported for instance in a helical movement along the heating means.

The invention further relates to an apparatus for performing this method, provided with heating means, means for transporting the products along the heating means and means for varying the orientation of the products transported along the heating means.

The transporting means and the orientation variation means can be embodied integrally and take the form of a rotatable screw conveyor arranged along the heating means.

## Description

The invention relates to a method for subjecting products to a heat treatment by transporting the products in a helical movement along heating means.

Such a method is known, for instance from GB-2 082 447. In this known method french fries are fried by being placed in a stationary drum with screw conveyor rotating therein or a rotating drum with stationary screw ribbon in which a radiation heating source is arranged. The air in the drum is heated by the heat radiation so that it functions as hot air oven. The air is additionally set into circulation by a fan. The heat treatment of the products therefore takes place by heat radiation and/or convection.

In addition, the cooking of food products on industrial scale is known. Potato products such as french fries can for instance be pre-fried by guiding them on a wire mesh belt through a reservoir with hot oil. Here the heat transfer to the products therefore takes place through conduction.

The known methods have the drawback that the efficiency of the heat transfer is relatively low, whereby the products must cover a relatively long path along the heating means in order to absorb sufficient heat. The installations for use in the known methods are hereby relatively voluminous and therefore costly. In addition, the frying of potato products in oil results in a relatively fatty end product, which is nowadays perceived as undesirable.

The invention has for its object to provide an improved method for subjecting products to a heat treatment, in particular food products. According to the invention this is achieved in that the products are placed in heat-conducting contact with the heating means. Heat transfer is intensified by the helical movement of the products in combination with the conducting contact, whereby the products only require transporting along the heating means for a short time or over a short distance. The efficiency of the heat treatment is thus increased.

In preference the products are heated to a temperature of at least 150°C and more preferably at least 200°C. The method is thus suitable for cooking products.

The invention also relates to an apparatus for performing the above described method. According to the invention such an apparatus comprises heating means and means for transporting the products along the heating means in a helical movement, wherein the transporting means are adapted to place the products in heat-conducting contact with the heating means. Because such an apparatus has a high heat transfer efficiency it can take a comparatively small form. The cost of the apparatus will therefore also be relatively limited.

The transporting means preferably take the form of a rotatable screw conveyor arranged along the heating means and the heating means comprise a housing which encloses the screw conveyor and the walls of which are heated. This enables a simple, compact and robust construction.

Further preferred embodiments of the apparatus according to the invention are described in the dependent claims 6-13.

The invention is now elucidated on the basis of an embodiment, wherein reference is made to the annexed drawing, in which:
figure 1 shows a partly cut away perspective view of a heat treatment apparatus according to the invention, and
figure 2 is a cross-sectional detail view of a part of the apparatus.

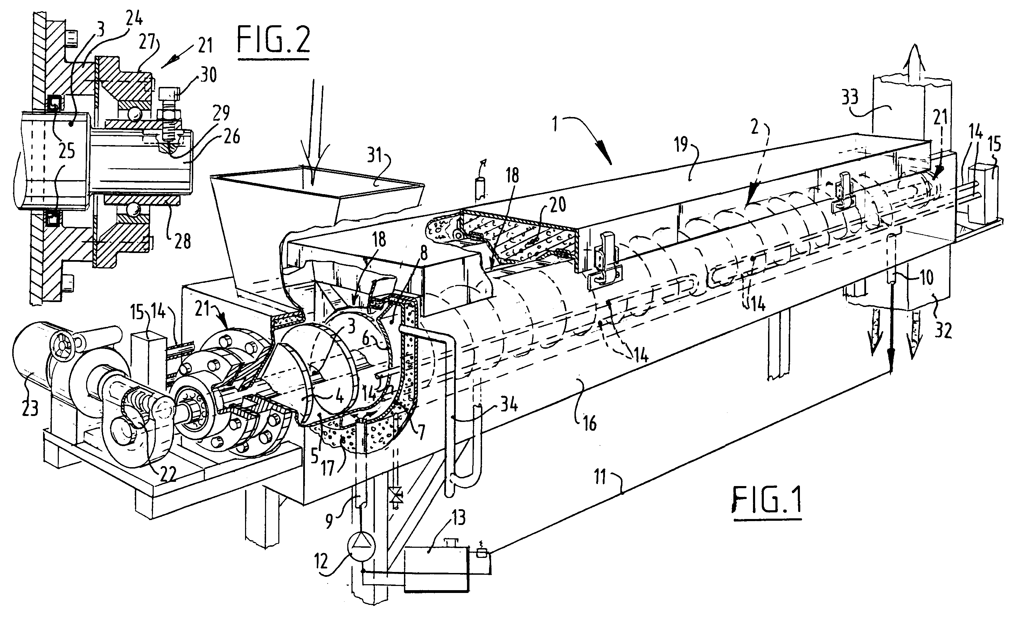

An apparatus 1 (figure 1) for subjecting products to a heat treatment, for instance cooking food products such as types of meat, potato products, eggs or types of vegetables, is provided with heating means and means for transporting the products in a helical movement along the heating means. In the shown embodiment the transporting means take the form of a rotatable screw conveyor 2 which is arranged along the heating means. Screw conveyor 2 is formed by a shaft 3 to which is fixed an endless ribbon 4. Other types of screw can of course also be envisaged, such as for instance a so-called paddle conveyor, i.e. a shaft with separate blades, or a low-pressure conveyor, thus a screw with a screw ribbon which is connected to the shaft by spacer members.

The screw conveyor 2 transports the product or products through a chamber 5 which is defined by a housing which at least partially encloses screw conveyor 2 and at least a part of the walls of which is heated. In the shown embodiment the housing is formed by a tubular body 6 which fits closely round screw conveyor 2 over about 3/4 of its periphery. The tubular body 6 is in turn enclosed by a jacket 7 which, together with tubular body 6, encloses a space 8 in which a medium for heating can be arranged. In the embodiment shown oil is used as medium in respect of the relatively high temperatures required, which oil is fed to space 8 via a feed conduit 9 and leaves it again via a drain conduit 10 located on the other side of apparatus 1. Drain conduit 10 is connected to feed conduit 9 by a return conduit 11 in which are accommodated a pump 12 and a filtering and buffering unit 13.

In order to enable cooking of the products in chamber 5 the oil in space 8 is heated to a relatively high temperature of at least about 150°C to 200°C. For this purpose a plurality of heating spirals 14 protrude into the space 8 which can be supplied with electric current via junction boxes 15. Other methods of heating are also possible, such as for instance indirect heating by steam or gas, or heating of the oil in an external heat exchanger. In order to limit as far as possible any heat loss and therewith the energy consumption of apparatus 1, the tubular body 6 and the jacket 7 arranged therearound are accommodated in a housing 16 filled with insulating material 17. Tubular body 6 does not completely enclose the screw conveyor 2. Present at the top over practically the whole length of screw conveyor 2 is an opening 18 which is covered by a removable, in this case pivotable, cover 19. Cover 19 is also lined with insulating material 20 to prevent heat loss therethrough. Screw conveyor 2 is easily accessible for cleaning and/or servicing operations by opening cover 19.

The shaft 3 of screw conveyor 2 is mounted at its ends in housing 16 by means of bearing units 21. Shaft 3 is driven by a motor 23 via a transmission, in this case a worm wheel transmission 22. The motor 23 or drive 22 can herein also be provided with suitable means for controlling the rotation speed of screw shaft 3 and therewith the transporting speed and the processing time of the products in apparatus 1.

The chamber 5 in which the products are transported is closed at both its outer ends by a closing plate 24 connected to the bearing unit 21. This closing plate 24 is provided with an aperture through which the screw shaft 3 passes and a sealing ring 25 enclosing this aperture. Sealing ring 25 is herein for instance a heat-resistant rubber ring reinforced with steel. In order to enable expansion or contraction of the screw conveyor as a result of the temperature differences during use of apparatus 1, at least one outer end of screw conveyor 2 is mounted for sliding in the transporting direction. For this purpose an outer end 26 of shaft 3 is arranged slidably in an inner ring 28 of the bearing which is connected rotatably to an outer ring 27 thereof. The inner ring 28 is non-rotatable but connected to shaft 26 for sliding in axial direction by means of a fixation screw 30, the extremity of which is placed into a key way 29 recessed into the shaft end 26.

The product for subjecting to a heat treatment is supplied to the apparatus 1 via an infeed hopper 31 and then advanced by the screw conveyor through chamber 5, the walls of which are heated by the oil in space 8. The temperature of the oil can herein be regulated between for instance 20 and 250°C by controlling the strength of current through heating spirals 14. The temperature of the oil is herein monitored by a sensor (not shown) which is connected to a control circuit for the heating elements 14. Because different heating elements 14 are present, the temperature in the whole space 8 can be precisely controlled and variations in temperature can for instance also be effected between the infeed side and the discharge side. The adjusted temperature in combination with the adjusted rotation speed of screw conveyor 2 determines the amount of heat which is transferred to the product during transport through apparatus 1 and therefore the degree to which the product is pre-fried or pre-cooked. The product finally leaves apparatus 1 via a discharge opening 32. A suction opening 33 can also be arranged above discharge opening 32 whereby water vapour released from the product during the heat treatment can be drawn off.

In order to prevent the product adhering fixedly to the screw conveyor 2 or the tubular body 6, these latter can be coated with a low-friction material, such as for instance PTFE (teflon).

So as to absorb pressure differences resulting from heating of the oil in the space 8 and to remove a possible overpressure whereby tubular body 6 could be deformed, the space 8 is connected to the outside environment via a pressure relief 34 in the form of a siphon.

In order to prevent caking together of the products placed in feed hopper 31, a rotating releasing member such as for instance a rotary spinner can further be arranged therein.

Because the products are continuously turned over by the screw conveyor 2 during their transport along the heating means in the heat treatment apparatus 1 according to the invention, an intensive heat transfer takes place with high efficiency, whereby both the processing time of the products in apparatus 1 and the installed heating capacity can be limited. A relatively small heat treatment apparatus 1 can hereby suffice which can be manufactured and operated at relatively low cost. In addition, the products are held clear of the heated oil during heat treatment, whereby no oil is absorbed into the products and the end product will therefore have a low fat content.

## Claims

1. Method for subjecting products to a heat treatment by transporting the products in a helical movement along heating means, **characterized in that** the products are placed in heat-conducting contact with the heating means.

2. Method as claimed in claim 1, **characterized in that** the products are heated to a temperature of at least 150°C and more preferably at least 200°C.

3. Apparatus for performing the method as claimed in either of the foregoing claims, comprising heating means and means for transporting the products along the heating means in a helical movement, which transporting means are adapted to place the products in heat-conducting contact with the heating means.

4. Apparatus as claimed in claim 3, **characterized in that** the transporting means take the form of at least one rotatable screw conveyor arranged along the heating means.

5. Apparatus as claimed in claim 3 or 4, **characterized in that** the heating means comprise a housing which at least partly encloses the screw conveyor and at least a part of the walls of which is heated.

6. Apparatus as claimed in claim 5, **characterized in that** the housing is formed by a tubular body fitting closely round the screw conveyor over at least a part of its periphery.

7. Apparatus as claimed in claim 6, **characterized in that** the heating means comprise a jacket which at least partly encloses the tubular body and which forms with the tubular body a space for receiving a heatable medium.

8. Apparatus as claimed in claim 7, **characterized in that** the heatable medium is oil.

9. Apparatus as claimed in claim 7 or 8, **characterized by** at least one heating element protruding into the space.

10. Apparatus as claimed in claim 9, **characterized in that** the heating element is adapted to heat the heatable medium to a temperature of at least 150°C and more preferably at least 200°C.

11. Apparatus as claimed in any of the claims 5-10, **characterized in that** the heated part of the walls of the housing and/or the screw conveyor is coated with a low-friction material.

12. Apparatus as claimed in any of the claims 4-11, **characterized in that** the screw conveyor is mounted slidably in the transporting direction.

13. Apparatus as claimed in any of the claims 6-12, **characterized in that** the tubular body only partially encloses the screw conveyor and the part of the screw not enclosed by the tubular body is covered by a removable cover.
